# EUROPEAN PATENT APPLICATION

(11) **EP 4 643 751 A1**
(43) Date of publication of application: **05.11.2025**
(21) Application number: 24173726.1
(22) Date of filing: 02.05.2024
(51) Int. Cl.: A47L 11/30, A47L 11/40, B08B 5/02, G06F 3/0488

(54) **METHOD FOR ADAPTING A USER-CLEANING MACHINE INTERFACE AND CLEANING MACHINE WITH SUCH INTERFACE**

(71) Applicant: Nilfisk A/S, 2100 Copenhagen Ø (DK)
(72) Inventor: GALLAHER, Ali, 2100 København Ø (DK); VERNALL, Chris, 2100 København Ø (DK)
(74) Representative: Larsen & Birkeholm A/S

(57) **Abstract**

The present invention relates to cleaning machines with adaptive user interfaces.

## Description

### Technical field of the invention

The present invention relates to cleaning machines, and in particular to pressure washers and floor cleaning machines with adaptive user interfaces.

### Background of the invention

When it comes to professional user operated cleaning machines, like scrubbers and high-pressure cleaners, they are typically used by a wide variety of operators, each with their own unique set of skills and experience levels. Ensuring that these machines have a user-friendly interface is crucial, not just for the effectiveness of the cleaning tasks, but especially for safety and efficiency.

A significant challenge arises from the fact that current cleaning machines tend to offer a one-size-fits-all user interface. This standardization can lead to a multitude of issues, primarily because it ignores the diverse capabilities of the operators. For a novice, an interface designed for an expert can be overwhelming and confusing, potentially leading to misuse or even accidents. Conversely, an experienced operator might find a simplified interface to be lacking in functionality and efficiency.

### Summary of the invention

It is an object of the present invention to provide a cleaning machine that overcome the above-mentioned problems.

The present invention is a user operated cleaning machine with a user interface that can adapt to the individual using it, much like the concept of adaptive user interfaces in software. The cleaning machine may e.g., be configured to detect the skill level of the operator, e.g., through a login system, or a set of initial questions, and then present an interface tailored to that person's abilities. For the inexperienced, it could offer guided operation, simpler choices, and more substantial safety checks. For the expert, it could unlock advanced features and shortcuts that would allow for faster and more complex tasks to be performed with ease. Moreover, a service technician who is servicing the cleaning machine should have access to functionalities of the cleaning machine, to which the cleaning operators have not.

In doing so, not only would the cleaning machine become more accessible and safer for all operators - it would also likely increase the productivity and satisfaction of the users. This user-centric approach to design acknowledges the diversity of operators and respects their varying needs, ultimately leading to a better work environment and a more efficient use of the equipment. Moreover, the user-centric approach assists in ensuring that the cleaning machine is used in the most sustainable manner possible, by assisting in using only the power, liquid, and cleaning detergent necessary for a given cleaning operation.

A first aspect relates to a method of adapting a user-cleaning machine interface comprising the steps of:
- optionally, but preferably, outputting a first cleaning machine user interface to a user;
- receiving input action from the user interacting with the first cleaning machine user interface;
- determining the user's operational usability of the cleaning machine based on said input action;
- outputting a second adapted cleaning machine user interface to a user based on the user's determined operational usability of the cleaning machine.

A second aspect relates to a method for adapting a user-cleaning machine interface comprising the steps of:
- optionally, but preferably, outputting a first cleaning machine user interface to a user;
- receiving input action from the user interacting with the first cleaning machine user interface;
- recording the input action;
- determining the user's operational usability of the cleaning machine based on said input action;
- outputting a second adapted cleaning machine user interface to a user based on the user's determined operational usability of the cleaning machine.

In the present context, the user's operational usability of the cleaning machine is to be understood broadly, merging the concept of usability, which encompasses the ease of use and the quality of the user's interaction with the machine, with the operational aspect, implying access rights and permissions for the machine's operation. The term "operational usability" suggests not only that a user can easily interact with the machine but also that the access rights and permissions are managed in such a way as to contribute to a seamless and efficient user experience.

In one or more embodiments, the received input action comprises a user experience level selected by the user and presented to the user via the first cleaning machine user interface.

In one or more embodiments, the received input action comprises a user experience level selected by the user and presented to the user via the first cleaning machine user interface as a scale from beginner on one end of the scale to advanced on another end of the scale.

In one or more embodiments, the received input action comprises a predefined user experience level linked to a user login. The user login process may include the use of a physical dongle (dongle verification), a personal code, an SMS login, or combinations thereof. This login process may thereby ensure a flexible yet secure method of authentication by offering users multiple options to verify their identity, each adding a layer of security that complements the basic username and password entry. A multi-factor authentication approach enhances security, reducing the risk of unauthorized access. The dongle may in some embodiments be detected before the user is close enough to operate the cleaning machine, e.g., if the dongle is configured to wirelessly send information via a short-range data exchange technology, e.g., via WPAN.

In one or more embodiments, the cleaning machine is a floor cleaning machine, and wherein personalized pre-set floor cleaning programs are outputted and made available for selection via the second adapted cleaning machine user interface, each available personalized pre-set floor cleaning program being specifically chosen based on an identified user experience level of operating the floor cleaning machine.

In one or more embodiments, the cleaning machine is a high-pressure washer, and wherein personalized pre-set high-pressure washer cleaning programs are outputted and made available for selection via the second adapted cleaning machine user interface, each available personalized pre-set high-pressure washer cleaning program being specifically chosen based on an identified user experience level of operating the high-pressure washer.

In one or more embodiments, the cleaning machine is a floor cleaning machine, and wherein personalized pre-set floor cleaning programs are outputted and made available for selection via the second adapted cleaning machine user interface, each available personalized pre-set floor cleaning program being specifically chosen based on an identified user determined operational usability of the cleaning machine.

In one or more embodiments, the cleaning machine is a high-pressure washer, and wherein personalized pre-set high-pressure washer cleaning programs are outputted and made available for selection via the second adapted cleaning machine user interface, each available personalized pre-set high-pressure washer cleaning program being specifically chosen based on an identified user determined operational usability of the cleaning machine.

In one or more embodiments, the outputting operation of the first cleaning machine user interface comprises outputting one or more training exercises that are integral to the cleaning machine, and wherein the input action from the user relating to said training exercises is used in determining the user's user experience level of operating the cleaning machine.

A third aspect relates to a cleaning machine comprising:
- a user interface output component including instructions executable by a processor to output a first user interface to an output device;
- an input device configured to receive input user actions from a user interacting with the first user interface during a current session;
- an input tracking component including instructions executable by the processor to register user actions received from the input device during the current session; and
- a user experience determination system including instructions executable by the processor to:
   a) determine the user's user experience level of operating the cleaning machine; and
   b) instruct the user interface output component to generate a second adapted cleaning machine user interface to the user based on the user's determined user experience level of operating the cleaning machine.

A fourth aspect relates to a cleaning machine comprising:
- a user interface output component including instructions executable by a processor to output a first user interface to an output device;
- an input device configured to receive input user actions from a user interacting with the first user interface during a current session;
- an input tracking component including instructions executable by the processor to register user actions received from the input device during the current session; and
- a user experience determination system including instructions executable by the processor to:
   a) determine the user's operational usability of the cleaning machine; and
   b) instruct the user interface output component to generate a second adapted cleaning machine user interface to the user based on the user's determined operational usability of the cleaning machine.

A fifth aspect relates to a cleaning machine comprising:
- a user interface output component including instructions executable by a processor to output a first user interface to an output device;
- an input device configured to receive input user actions from a user interacting with the first user interface during a current session; and
- a user experience determination system including instructions executable by the processor to:
   a) determine the user's user experience level of operating the cleaning machine; and
   b) instruct the user interface output component to generate a second adapted cleaning machine user interface to the user based on the user's determined user experience level of operating the cleaning machine.

A sixth aspect relates to a cleaning machine comprising:
- a user interface output component including instructions executable by a processor to output a first user interface to an output device;
- an input device configured to receive input user actions from a user interacting with the first user interface during a current session; and
- a user experience determination system including instructions executable by the processor to:
   a) determine the user's operational usability of the cleaning machine; and
   b) instruct the user interface output component to generate a second adapted cleaning machine user interface to the user based on the user's determined operational usability of the cleaning machine.

In principle, the first user interface may be a user interface without any action buttons, such as an empty screen, a single-coloured screen, e.g., a black, blue, or white screen, or a user interface in power saving mode.

In one or more embodiments, the cleaning machine is a floor cleaning machine, and wherein personalized pre-set floor cleaning programs are outputted by the user interface output component and made available for selection via the second adapted cleaning machine user interface, each available personalized pre-set floor cleaning program being specifically chosen based on an identified user experience level of operating the floor cleaning machine.

In one or more embodiments, the cleaning machine is a high-pressure washer, and wherein personalized pre-set high-pressure washer cleaning programs are outputted by the user interface output component and made available for selection via the second adapted cleaning machine user interface, each available personalized pre-set high-pressure washer cleaning program being specifically chosen based on an identified user experience level of operating the high-pressure washer.

In one or more embodiments, the cleaning machine is a high-pressure washer, and wherein personalized pre-set high-pressure washer cleaning programs are outputted and made available for selection via the second adapted cleaning machine user interface, each available personalized pre-set high-pressure washer cleaning program being specifically chosen based on an identified user determined operational usability of the cleaning machine.

In one or more embodiments, the outputting operation of the first cleaning machine user interface comprises outputting one or more training exercises that are integral to the cleaning machine, and wherein the input action from the user relating to said training exercises is used in determining the user's user experience level of operating the cleaning machine.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows a part of a floor cleaning machine according to various embodiments of the present invention.
Figures 2-4 show examples of user-cleaning machine interfaces adapted to specific users' user experience level of operating the cleaning machine of the present invention.

### Detailed embodiments of the invention

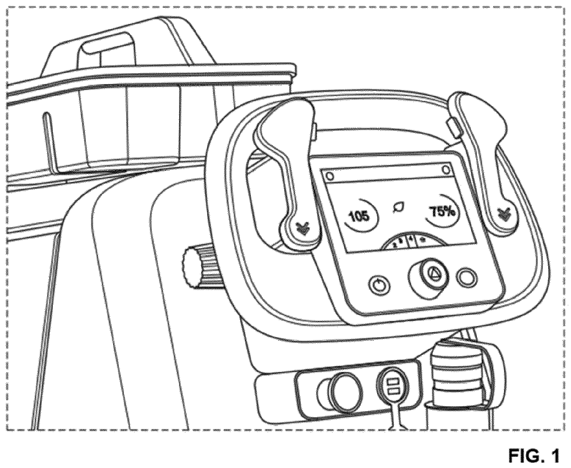

The present invention provides improved types of cleaning machines with user interfaces that must accommodate a wide range of operators, each bringing their unique skill sets and capabilities to the job. The core challenge is to make these interfaces as user-friendly as possible while also providing the flexibility needed to cater to this diversity. This is achieved by the present invention through an adaptable user interface that adjusts according to various inputs that reflect an operator's proficiency, job description, and experience, i.e., the operator's operational usability of the cleaning machine. An exemplary part of a cleaning machine may be seen in Figure 1, where both physical and electronic buttons are present to possibly be used in combination to provide the user input. Hence, in general, more than one user input may be needed, while in some embodiments, a single user input may suffice.

Preferably, the user-cleaning machine interface according to the present invention adapts to a specific user profile, offering different experiences and opportunities based on the user's skill level (e.g., skill levels grouped into trainee user, basic user, advanced user, supervisor user, and service user), preferences (e.g., language, display brightness, or warning messages), or other personalized criteria (e.g., a service technician vs. an operator). The user-cleaning machine interface may in the present context also be referred to as a personalized user interface. This concept falls under the broader category of adaptive user interfaces, but with a focus on customization for individual user profiles rather than just device or environmental contexts. A skilled user might see and interact with a more complex and feature-rich interface, while a beginner might see a simplified version with less possibility for interaction (e.g., is blocked from more advanced cleaning and/or maintenance operations). This is also referred to as adaptive difficulty or progressive disclosure, where the interface complexity adapts to the user's ability to use it effectively.

Hence, the user experience determination system is configured to alter the cleaning machine's interface based on several user inputs/actions, such as a password, responses to predefined questions, a user's self-assessment, data pushed wirelessly to the machine about a user's skill set, and outcomes from training exercises conducted on the machine.

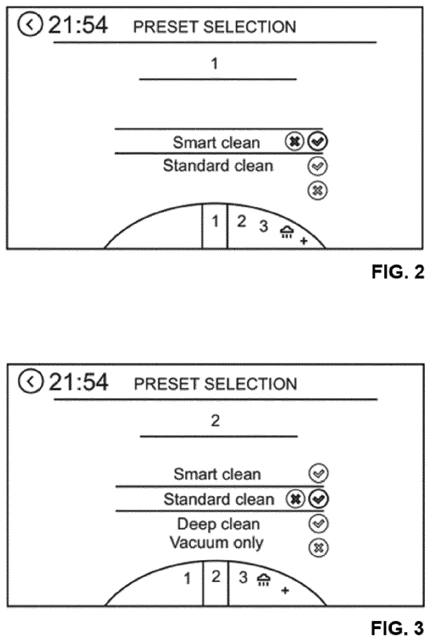

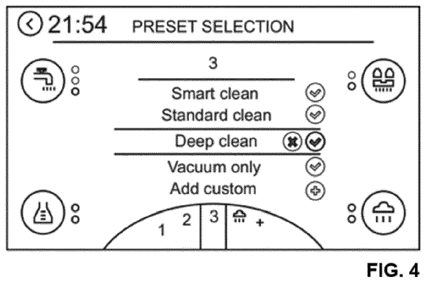

As an example, an operator of the cleaning machine begins their shift by logging into the machine, e.g., with a unique password, via a first user interface. This login operation is the first key to customizing the interface - it is linked to the user profile stored in the machine's memory. This profile may include information on the user's experience, preferences, job description, and previously recorded skill level. Upon login, the user experience determination system may automatically adapt/adjust the user interface to display the functions and settings that are most relevant and appropriate for that particular user (see Figures 2-4). For a novice/trainee user, this might mean a simplified dashboard (see Figure 2) with basic machine controls (e.g., smart clean and standard clean) and an emphasis on clear instructions for operation and safety. For a seasoned operator/advanced user, the interface (see Figure 3) could unlock advanced features and settings (e.g., deep clean and vacuum only), allowing for cleaning more specialized surfaces. For a supervisor user, the interface (see Figure 4) could unlock further advanced features and settings (e.g., manual mode available, further special surface cleaning programs selectable, to create own cleaning programs, or possibility to exchange, remove, or mount batteries and tools, such as brushes), allowing for more nuanced control over the machine's functions.

In addition to login-based customization, the user interface output component could offer a set of predefined questions at the start of each session. These questions would be designed to quickly assess the operator's comfort level with the upcoming tasks, with the user interface adapting accordingly. This could be particularly useful for situations where operators may have varying levels of familiarity with specific tasks or when they are operating a new or updated piece of equipment for the first time. Hence, one embodiment may involve the cleaning machine presenting, via the user interface output component, a series of predefined questions to the operator at the beginning of each session, with the user experience determination system automatically adapting the user interface in response to the answers provided. The questions could be designed to assess the operator's familiarity with the specific tasks they are about to perform, or the particular model of cleaning equipment being used. The interface could adjust in complexity and available options based on the operator's responses, thereby customizing the user experience to suit their current knowledge and skill set.

The user's self-evaluation represents another layer of personalization available for the user interface output component. Operators could be given the option to manually adjust their skill level, which would, in turn, adjust the user interface's complexity. This self-assessment could be monitored over time to ensure that an operator is not selecting levels that are too advanced, potentially leading to mistakes, or too basic, preventing them from working efficiently. Hence, in a further embodiment, the user interface output component could display a first user interface, which incorporates an operator self-assessment mechanism where the user can manually select a perceived skill level. This self-assessment feature would allow the user to adjust the complexity of the user interface. However, this mechanism may be supplemented by constraints to prevent the selection of a skill level that is incompatible with the operator's demonstrated abilities or historical data. These constraints would be designed to ensure safety and to prevent the operator from engaging machine functions that they are not yet qualified to use.

Wirelessly pushed data presents a more dynamic and continuous form of user interface adaptation that can be utilized by the user experience determination system. As operators undergo training and their skill sets evolve, data about their progress could be pushed to the machines they operate. This data could come from a centralized training management system that tracks each user's performance across various machines and tasks. The next time the operator logs in, the machine would automatically update its interface to reflect the new skill level, ensuring that the operator always has access to the appropriate tools and settings.

The integration of training exercises directly into the cleaning machine may also offer a powerful method for both skill assessment and user interface adaptation. An operator could engage in a virtual training session via the user interface output component, during which the user experience determination system automatically adapts the user interface in response to their performance. Based on the results, the user experience determination system could e.g., score the user's skills, and automatically adjust the user interface for their next real-world cleaning task. For example, if an operator shows improvement in handling complex cleaning scenarios during the simulation, the user experience determination system could then provide them with additional functionality in a future user interface that allows for more precise control over the cleaning parameters.

However, with adaptability comes the need for caution. The user interface should be designed to prevent operators from inadvertently accessing settings that surpass their skill level, which could result in equipment damage or safety hazards. Therefore, the cleaning machine should have safeguards, such as requiring managerial approval for certain level changes or incorporating performance thresholds that must be met before the user interface adapts to a more advanced state.

Furthermore, adaptability should not come at the expense of consistency. The user interface should maintain a level of design uniformity across different skill levels to ensure that operators can easily transition from one level to the next. This includes consistent use of colours, symbols, and layout philosophies. A familiar, intuitive interface can reduce cognitive load and allow operators to focus more on the task at hand rather than on navigating the user interface itself.

While adaptability significantly enhances usability, it should preferably be implemented to ensure it does not become a source of frustration. Operators should in some embodiments have the option to override automatic adjustments to some extent, giving the user a sense of control and ownership over the cleaning machine.

## Claims

1. A method of adapting a user-cleaning machine interface comprising the steps of:
- optionally, but preferably, outputting a first cleaning machine user interface to a user;
- receiving input action from the user interacting with the first cleaning machine user interface;
- determining the user's operational usability of the cleaning machine based on said input action;
- outputting a second adapted cleaning machine user interface to a user based on the user's determined operational usability of the cleaning machine.

2. The method according to claim 1, wherein the step of determining the user's operational usability of the cleaning machine includes determining the user experience level of operating the cleaning machine.

3. The method according to any one of the claims 1-2, wherein the step of determining the user's operational usability of the cleaning machine includes determining the user's access rights to the cleaning machine.

4. The method according to any one of the claims 1-3, wherein the received input action comprises a user experience level selected by the user and presented to the user via the first cleaning machine user interface.

5. The method according to any one of the claims 1-3, wherein the received input action comprises a user experience level selected by the user and presented to the user via the first cleaning machine user interface as a scale from beginner on one end of the scale to advanced on another end of the scale.

6. The method according to any one of the claims 1-5, wherein the received input action comprises a predefined user experience level linked to a user login.

7. The method according to any one of the claims 1-6, wherein the cleaning machine is a floor cleaning machine, and wherein personalized pre-set floor cleaning programs are outputted and made available for selection via the second adapted cleaning machine user interface, each available personalized pre-set floor cleaning program being specifically chosen based on an identified user determined operational usability of the cleaning machine.

8. The method according to any one of the claims 1-6, wherein the cleaning machine is a high-pressure washer, and wherein personalized pre-set high-pressure washer cleaning programs are outputted and made available for selection via the second adapted cleaning machine user interface, each available personalized pre-set high-pressure washer cleaning program being specifically chosen based on an identified user determined operational usability of the cleaning machine.

9. The method according to any one of the claims 1-8, wherein the outputting operation of the first cleaning machine user interface comprises outputting one or more training exercises that are integral to the cleaning machine, and wherein the input action from the user relating to said training exercises is used in determining the user's user experience level of operating the cleaning machine.

10. A cleaning machine comprising:
- a user interface output component including instructions executable by a processor to output a first user interface to an output device;
- an input device configured to receive input user actions from a user interacting with the first user interface during a current session; and
- a user experience determination system including instructions executable by the processor to:
a) determine the user's operational usability of the cleaning machine; and
b) instruct the user interface output component to generate a second adapted cleaning machine user interface to the user based on the user's determined operational usability of the cleaning machine.

11. The cleaning machine according to claim 10, wherein the operational usability of the cleaning machine is determined from a direct selection by the user.

12. The cleaning machine according to claim 10, wherein the user's operational usability of the cleaning machine includes determining the user experience level of operating the cleaning machine, and wherein the user experience level is selected along a scale from beginner on one end of the scale to advanced on another end of the scale.

13. The cleaning machine according to anyone of the claims 10-12, wherein the cleaning machine is a floor cleaning machine, and wherein personalized pre-set floor cleaning programs are outputted by the user interface output component and made available for selection via the second adapted cleaning machine user interface, each available personalized pre-set floor cleaning program being specifically chosen based on an identified user operational usability of the cleaning machine.

14. The cleaning machine according to anyone of the claims 10-12, wherein the cleaning machine is a high-pressure washer, and wherein personalized pre-set high-pressure washer cleaning programs are outputted by the user interface output component and made available for selection via the second adapted cleaning machine user interface, each available personalized pre-set high-pressure washer cleaning program being specifically chosen based on an identified user operational usability of the cleaning machine.
